# EUROPÄISCHE PATENTSCHRIFT

(11) **EP 1 963 693 B1**
(45) Veröffentlichungstag und Bekanntmachung des Hinweises auf die Patenterteilung: **02.03.2011**
(21) Anmeldenummer: 06828638.4
(22) Anmeldetag: 09.12.2006
(51) Int. Cl.: F16C 19/26, F16C 33/34, F16C 33/64

(54) **VERFAHREN ZUR HERSTELLUNG EINES WÄLZLAGERRINGES**
METHOD FOR THE PRODUCTION OF A ROLLING BEARING RACE
PROCEDE DE PRODUCTION D'UN ANNEAU DE ROULEMENT

(30) Priorität: 21.12.2005 DE 102005061179
(43) Veröffentlichungstag der Anmeldung: 03.09.2008
(60) Teilanmeldung: 10005117.6
(73) Patentinhaber: Schaeffler Technologies GmbH & Co. KG, 91074 Herzogenaurach (DE)
(72) Erfinder: WEIDNER, Alexander, 90766 Fürth (DE); HENNEFELDER, Markus, 91472 Ipsheim (DE); GRAF, Paul, 91486 Uehlfeld (DE)
(86) Internationale Anmeldenummer: PCT/DE2006/002193
(87) Internationale Veröffentlichungsnummer: WO 2007/076772

(56) Entgegenhaltungen:
- EP-A- 1 347 185
- WO-A-01/25645
- DE-A1- 10 042 901
- FR-A1- 2 776 237
- JP-A- 2000 002 251

## Beschreibung

### Gebiet der Erfindung

Die vorliegende Erfindung betrifft ein Verfahren zur Herstellung eines Lagerrings für ein Wälzlager.

Aus dem Stand der Technik sind verschiedene Wälzlager bekannt. So sind auch solche Wälzlager bekannt, bei denen ein Lagering d. h. der Außenring und/oder der Innenring einen Bord aufweist, um auf das Lager wirkende Axialkräfte aufzunehmen. Bei aus dem Stand der Technik bekannten Verfahren zur Herstellung von Wälzlagern werden die jeweiligen Lagerringe durch ein Drehverfahren hergestellt und anschließend wird in noch ungehärtetem Zustand in einem Eckbereich zwischen der Laufbahn des Lagerrings und dem seitlichen Bord ein so genannter Schleiffreistich angebracht. Dieser Schleiffreistich wird benötigt, um anschließend die Laufbahn und die Bordlauffläche schleifen zu können.

Durch diesen Schleiffreistich entsteht eine scharfe Kante in der Bordlauffläche. Diese Kante wiederum kann in Kombination mit ungeeigneten Schmierstoffen bedingt durch den axialen Anlauf der Rollenstirnflächen diese beschädigen. Genauer gesagt kann es bedingt durch die Kante zu kleinen Schäden der Wälzkörper bzw. deren Stirnflächen kommen. Insbesondere bei der Verwendung von Wälzkörpern mit planen Rollenstirnflächen ist eine deratige Beschädigung dieser Flächen durch die Kante zu befürchten.

Aus der JP-A-2000-02251 bzw. der EP-A-1 347 185 ist das Verfahren gemäß Oberbegriff des Anspruchs 1 bekannt.

Der vorliegenden Erfindung liegt die Aufgabe zugrunde, ein Verfahren zur Herstellung eines Wälzlagers zur Verfügung zu stellen, mit dem ein Wälzlager mit gegenüber dem Stand der Technik erhöhter Lebensdauer zur Verfügung gestellt werden kann. Daneben soll die axiale Tragfähigkeit von Lagern erhöht werden.

Die genannte Aufgabe wird durch die Merkmale des unabhängigen Anspruchs 1 gelöst. Vorteilhafte Ausführungsformen und Weiterbildungen sind Gegenstand der Unteransprüche.

Bei dem erfindungsgemäßen Verfahren zur Herstellung eines Lagerrings für ein Wälzlager, wobei der Lagerring eine Laufbahn für einen Wälzkörper und unabhängig dazu wenigstens einen seitlichen Bord mit einer Bordlauffläche zur axialen Führung des Wälzkörpers aufweist wird in einem Verfahrensschritt eine Einkerbung in eine dem Wälzkörper zugewandte Wandung des Lagerrings eingebracht. Erfingdungsgemäß wird die Endkontur des Lagerrings durch ein Hartdrehverfahren hergestellt.

Bevorzugt dient der Bord auch zur Aufnahme axial auf das Wälzlager wirkender Belastungen.

Unter einer Endkontur des Lagerrings wird eine Kontur verstanden, die zur Fertigstellung nur noch einer Feinbearbeitung bedarf, wobei das Einbringen der Einkerbung auch als Feinbearbeitung angesehen wird.

Durch das erfindungsgemäße Hartdrehverfahren wird der bereits gehärtete Lagerring bearbeitet. In diesem Falle ist kein weiteres Schleifen der Bordlauffläche nötig.

Unter einer Einkerbung wird eine Nut oder Ausnehmung verstanden, die bevorzugt im Wesentlichen in radialer Richtung in den Lagerring eingebracht wird. Vorzugsweise befindet sich diese Einkerbung, welche die Funktion eines Schleiffreistichs übernimmt, in einem Eckbereich zwischen der Bordlauffläche und der Laufbahn.

Ein Einstechen des Einstechkörpers in radialer Richtung des Wälzlagers ist möglich, wenn der seitliche Bord bzw. dessen Innenwandung nicht mehr nachgeschliffen zu werden braucht. Durch das Einstechen des Einstechkörpers in radialer Richtung des Wälzlagers wird vermieden, dass in der Bordlauffläche eine Kante entsteht, die beim späteren Betrieb die einzelnen Wälzkörper beschädigt.

Vorzugsweise wird in einem weiteren Verfahrensschritt die Laufbahn geschliffen. Zum Durchführen dieses Schleifens dient die Einkerbung im Eckbereich zwischen der Laufbahn und dem seitlichen Bord. Durch die Einkerbung wird die Beschädigung der Bordfläche durch das Schleifwerkzeug verhindert. Bei einer weiteren bevorzugten Ausführungsform wird der Bord mit einem Bordöffnungswinkel von mehr als 90° hart gedreht. Nach diesem Hartdrehen wird in einem letzten Arbeitsgang die Einkerbung bzw. der Schleiffreistrich eingebracht, um ein Schleifen der Laufbahn zu ermöglichen.

Bevorzugt liegt der Bordöffnungswinkel zwischen 90° und 92°. Durch diesen Bordöffnungswinkel wird die Kontaktgeometrie zwischen dem Walzkörper und der Bordlauffläche verbessert.

Genauer wird durch diesen leicht über 90° liegenden Bordöffnungswinkel, beispielsweise 90,5°, der Anlauf zwischen den Wälzkörpern und dem Bord verbessert und damit die Lebensdauer des Wälzlagers erhöht.

Bei einer weiteren bevorzugten Ausführungsform weist die Einkerbung wenigstens abschnittsweise ein kreissegmentförmiges Profil auf, wobei dieses kreissegmentförmige Profil einen Krümmungsradius aufweist, der zwischen 0,5 mm und 2 mm und bevorzugt zwischen 1 mm und 1,5 mm liegt. Diese Einkerbung dient, wie oben ausgeführt, als Schleiffreistich, der ein Schleifen der Laufbahn ermöglicht. Da der Verlauf zwischen der Einkerbung und der Wandung kantenlos ist, ist ein Schleifen der Bordlauffläche nicht möglich.

Bevorzugt weist die Einkerbung einen in der Laufbahn des Lagerrings zugewandten Endbereich auf und verläuft in diesem Endbereich unter einem Winkel gegenüber der Laufbahn, der zwischen 20° und 40°, bevorzugt zwischen 25° und 37° und besonders bevorzugt zwischen 30° und 34° liegt.

Weitere Vorteile und Ausführungsformen der vorliegenden Erfindung ergeben sich aus den beigefügten Zeichnungen. Darin zeigen:
- Fig. 1: eine teilweise Darstellung eines Lagerrings nach dem Stand der Technik;
- Fig. 2: eine teilweise Darstellung eines erfindungsgemäßen Lager- rings;
- Fig. 3: eine Darstellung zur Veranschaulichung des Herstellungsver- fahrens für einen erfindungsgemäßen Lagerring;
- Fig. 4: eine Teildarstellung eines Lagerrings nach dem Stand der Technik mit einem Wälzkörper;
- Fig. 5: eine vergrößerte Teildarstellung eines erfindungsgemäßen Lagerrings mit einem Wälzkörper;
- Fig. 6: eine Darstellung eines Lagerrings mit einem Wälzkörper;
- Fig. 7: eine vergrößerte Darstellung eines Lagerrings mit einem Wälzkörper nach dem Stand der Technik;
- Fig. 8: eine vergrößerte Darstellung zur Veranschaulichung eines Wälzlagers;
- Fig. 9: eine Detaildarstellung eines Lagerrings mit einem Wälzkör- per;
- Fig. 10: einen Wälzkörper; und
- Fig. 11: einen Wälzkörpers in einer anderen Ausführungsform.

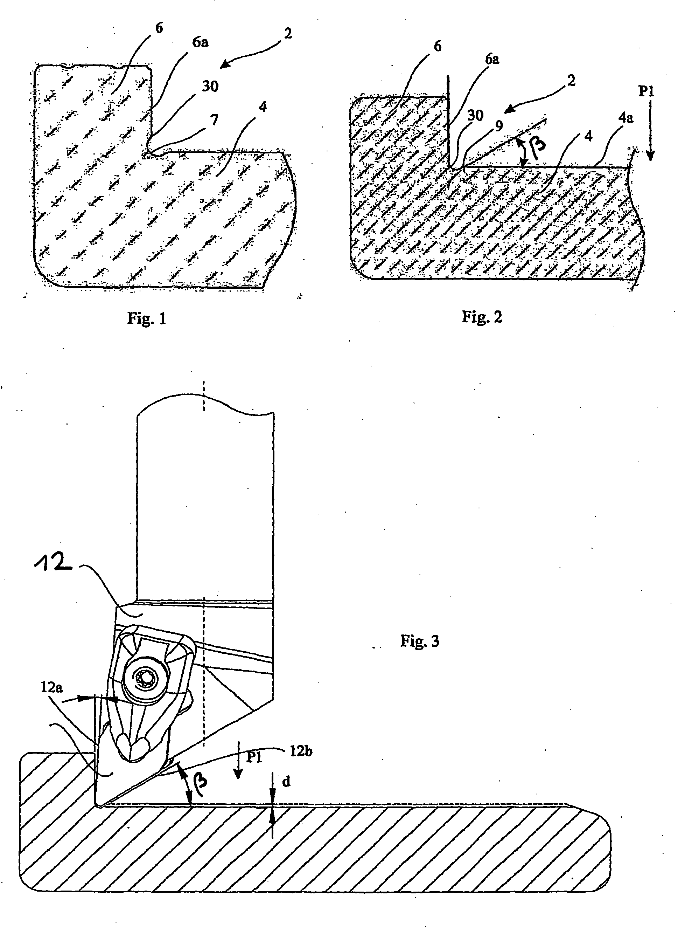

Fig. 1 zeigt eine Ausschnittsdarstellung eines mit einem nach dem Stand der Technik bekannten Verfahren hergestellten Lagerrings 2. Dabei bezieht sich das Bezugszeichen 4 auf einen Zentralbereich des Lagerrings und das Bezugszeichen 6 auf einen seitlichen Bord. Die Bordlauffläche 6a des Bords ist einem (nicht gezeigten) Wälzkörper zugewandt.

Wie eingangs erwähnt, wird bei dem aus Stand der Technik bekannten Verfahren die Einkerbung 7 bzw. der Schleiffreistich vor dem Härten in das Material eingebracht. Erst danach wird das Material gehärtet. Bei diesem Verfahren ist es erforderlich, auch die Bordlauffläche 6a noch zu schleifen. Daher wird die Einkerbung 7, wie in Fig. 1 gezeigt in einer schrägen Richtung bezüglich des Bordes 6 und des Zentralbereiches 4 eingebracht. Dadurch entsteht im Stand der Technik in der Bordlauffläche 6a eine Kante 30. Diese scharfe Kante 30 kann sich ungünstig auf den axialen Anlauf insbesondere planer Rollenstirnflächen auswirken.

Fig. 2 zeigt einen nach dem erfindungsgemäßen Verfahren hergestellten Lagerring. Dabei wird das Material des Lagerrings zunächst gehärtet und dann die Endkontur insbesondere die Endkontur der Bordlauffläche 6a durch Hartdrehen hergestellt. In diesem Falle ist ein Nachschleifen der Bordlauffläche 6a nicht nötig sondern lediglich ein Schleifen der Laufbahn 4a des Zentralbereichs 4. In diesem Fall wird das Werkzeug zur Erzeugung des Schleiffreistichs eine der Einkerbung 7 in der radialen Richtung P1 des Lagerrings 2 eingebracht wodurch das Entstehen der Kante 30 aus Fig. 1 vermieden wird.

Genauer gesagt wird die Bordfläche 6a unter Einhaltung eines erforderlichen Bordöffnungsmittels im Bereich von 90° bis 92°, beispielsweise 90,5°, hart fertig gedreht und in einem letzten Arbeitsgang der Schleiffreistich eingebracht, um ein Schleifen der Laufbahn 4a zu ermöglichen.

Das Bezugszeichen 9 bezieht sich auf einen der Laufbahn 4a zugewandten Endbereich der Einkerbung 7. Dieser Endbereich verläuft in axialer Richtung unter einen Winkel von etwa 32° gegenüber der Laufbahn.

Fig. 3 veranschaulicht die Erzeugung der Einkerbung 7 beziehungsweise des Schleiffreistichs bei einem erfindungsgemäßen Verfahren. Dazu wird ein Werkzeug 13 nach dem Hartdrehen des Lagerrings in im Wesentlichen radialer Richtung (Pfeil P1) in den Lagerring 2 gedrückt. Das Bezugszeichen 12 kennzeichnet einen Einstechkörper des Werkzeugs 13. Das Bezugszeichen d bezeichnet das Schleifaufmass, welches in einem Bereich von 0,5 mm liegt. Der Winkel β zwischen der Kante 12b des Einstechkörpers 12 und der Laufbahn 4a liegt in einem Bereich von 30° bis 35°.

Die Bordlauffläche 6a verläuft nicht in einem exakt 90° Winkel gegenüber der Laufbahn 4a sondern in einem geringfügig größeren Winkel. Der Winkel γ zwischen der Kante 12a des Einstechkörpers 12 und der Bordlauffläche 6a liegt zwischen 3° und 4°.

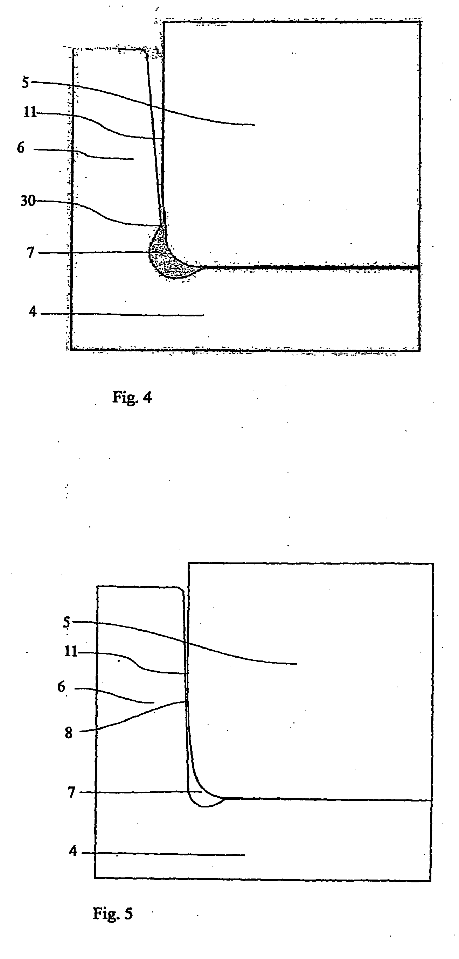

Fig. 4 zeigt eine Detaildarstellung eines Lagerrings nach dem Stand der Technik mit einem an diesem anlaufenden Wälzkörper 5. Dabei ist der Bordwinkel hier nicht maßstäblich dargestellt. Man erkennt, dass der Wälzkörper 5 die Kante 30 des Schleiffreistichs bei der Einkerbung 7 berühren kann. Da sich der Wälzkörper gegenüber dieser scharfen Kante 30 bewegt, kann es zu den eingangs erwähnten kleinen Schäden in dem Wälzkörper und damit zu einer beschleunigten Abnutzung desselben kommen. Das Bezugszeichen 11 bezieht sich auf die Stirnfläche des Wälzkörpers.

Fig. 5 zeigt einen Lagerring mit einem Wälzkörper wobei der Lagerring mit den erfindungsgemäßen Verfahren hergestellt wurde. Man erkennt, dass in diesem Falle keine Kante 30 vorhanden ist und damit der Wälzkörper 5 entsprechend schonender behandelt wird.

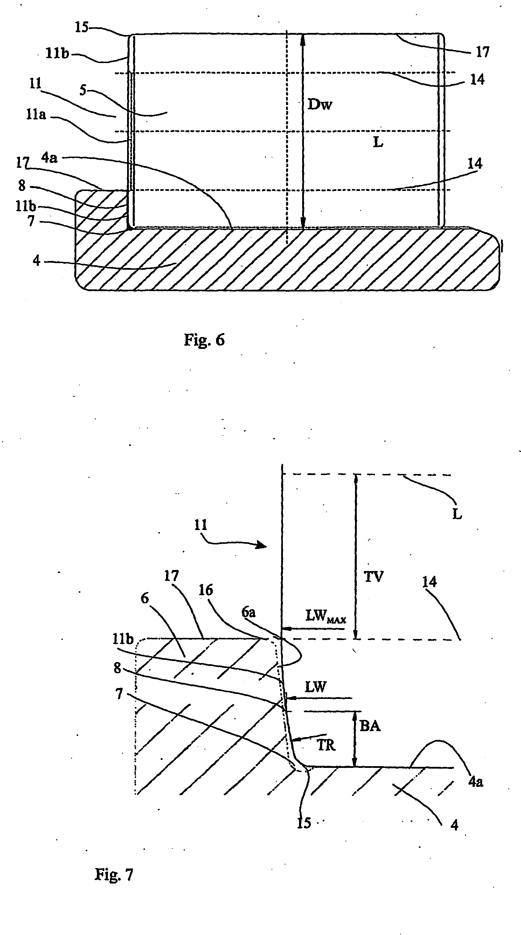

Fig. 6 zeigt eine Darstellung eines Lagerrings 2 mit einem Wälzkörper 5. Auch hier handelt es sich um einen hart gedrehten Lagerring. Die Stirnfläche 11 des Wälzkörpers 5 weist einen Zentralbereich 11a auf, der im Wesentlichen beliebig ausgeführt sein kann, da er nicht an dem Bord 6 anläuft. Auch ist es denkbar, dass der Zentralbereich 11a der Stirnfläche 11 eine Mulde oder dergleichen aufweist. Durch die spezielle Ausgestaltung der Randbereiche 11b der Stirnfläche 11 kann erreicht werden, dass zwischen dem Bord und der Stirnfläche nur ein einziger Berührpunkt auftritt, was unten noch eingehend erläutert wird.

Der Berührpunkt zwischen der Stirnfläche 11 des Wälzkörpers und der Bordfläche 6a ist mit 8 gekennzeichnet. Der Krümmungsradius des Eckbereichs 15 des Wälzkörpers liegt zwischen 0,5 mm und 4 mm bevorzugt zwischen 1 mm und 2 mm und besonders bevorzugt im Bereich von 1,5 mm.

Das Bezugszeichen L bezieht sich auf die Dreh- beziehungsweise Symmetrieachse des Wälzkörpers 5. Das Bezugszeichen 14 bezeichnet eine Torusmittelpunktslinie Linien, auf der bei einer torusballigen Ausführung des Wälzkörpers der Einstichpunkt 16 bzw. Mittelpunkt für die torusballige Krümmung liegt. Bevorzugt liegt die Linie 14 und damit der Einstichpunkt für die torusballige Krümmung auf der Höhe der Endfläche 17 des Bords 6.

Figur 7 zeigt eine vergrößerte Darstellung der in Figur 6 gezeigten Anordnung. Dabei bezeichnet das Bezugszeichen TV diejenige Verschiebung, um die die Torusmittelpunktslinie 14 gegenüber der Symmetrieachse L verschoben ist. Dies bedeutet, dass bei der in Figur 7 gezeigten Ausführungsform die Krümmung in dem Randbereich 11b der Stirnfläche 11 des Wälzkörpers auf einem Kreis liegt, dessen Kreismittelpunkt (der gleich dem Einstichpunkt 16 ist) wiederum auf der Linie 14 liegt.

Das Bezugszeichen LWₘₐₓ bezieht sich auf die maximale Länge des Wälzkörpers und das Bezugszeichen LW auf die Länge des Wälzkörpers im Bereich des Berührpunktes 8 zwischen dem Wälzkörper und der Bordlauffläche 6a. Dieser Berührpunkt 8 ist um den Abstand BA von der Laufbahn 4a des Lagerrings 2 entfernt. Bei der hier gezeigten Ausführungsform ist der Berührpunkt 8 in radialer Richtung etwa gleichweit von der Endfläche 17 des Bordes 6 und der Laufbahn 4a des Lagerrings entfernt.

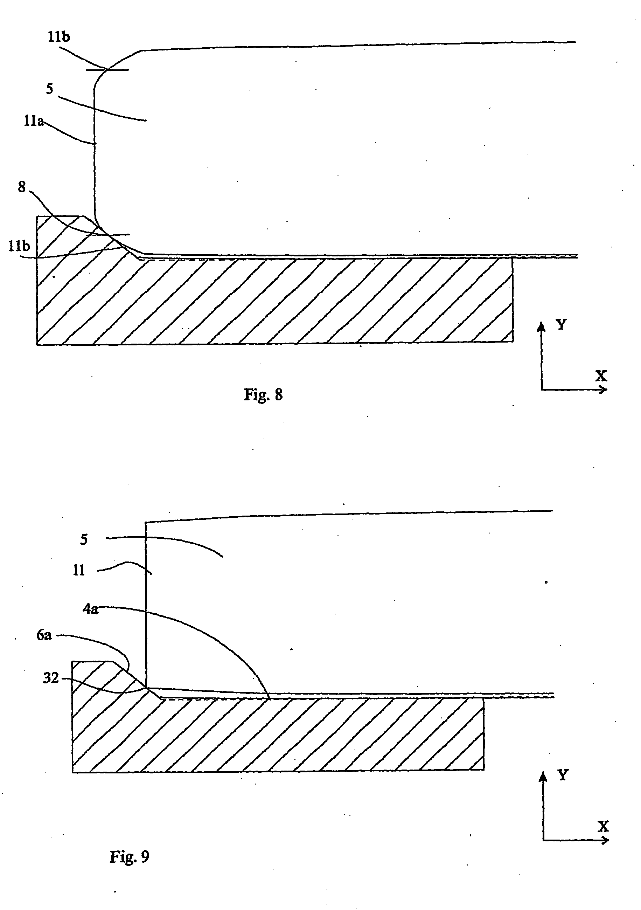

Fig. 9 zeigt eine vergrößerte Darstellung eines Lagerrings nach dem Stand der Technik mit einem Wälzkörper 5. Dabei wurde die Darstellung in x-Richtung und in y-Richtung unterschiedlich stark vergrößert.

Man erkennt, dass bei Verwendung des Wälzkörpers nach dem Stand der Technik eine Kante 32 des Wälzkörpers an der Bordfläche 6a des Bordes anläuft. Auch dieser Anlauf der Kante führt auf Dauer zu einer Beeinträchtigung der Bordfläche. Die Einkerbung 7 ist in Figur 9 nicht gezeigt.

Wie eingangs erwähnt, liegt der vorliegenden Erfindung die Aufgabe zugrunde, die Lebensdauer derartiger Wälzlager zu erhöhen, und insbesondere den Anlauf der Wälzkörper an den Borden des oder der Lagerringe zu verbessern.

Fig. 8 zeigt einen Lagerring 2, der mit einem verbesserten Wälzkörper 5 verwendet wird. Auch hier wurde die Darstellung in x-Richtung und in y-Richtung unterschiedlich stark vergrößert.

Dieser Wälzkörper weist keine scharfen Eckkanten, sondern abgerundete in diesem Fall torusballig ausgeführte Randbereiche 11b auf. Der Schleiffreistich bzw. die Einkerbung ist bei der in Fig. 8 gezeigten Darstellung nicht gezeigt. Man erkennt, dass es durch die torusballige Ausführung des Randbereichs 11b nicht zu einer scharfkantigen Berührung zwischen der Bordlauffläche 6a und der Stirnfläche 11 bzw. dem Stirnflächenbereich 11b der Stirnfläche 11 kommt. Damit kann beim Betrieb sowohl die Stirnfläche und damit der Wälzkörper als auch die Bordlauffläche 6a geschont werden. Idealerweise ergibt sich auch bei der in Fig. 8 gezeigten Ausführungsform im Wesentlichen eine Berührfläche 8 zwischen dem Wälzkörper und der Bordlauffläche 6a.

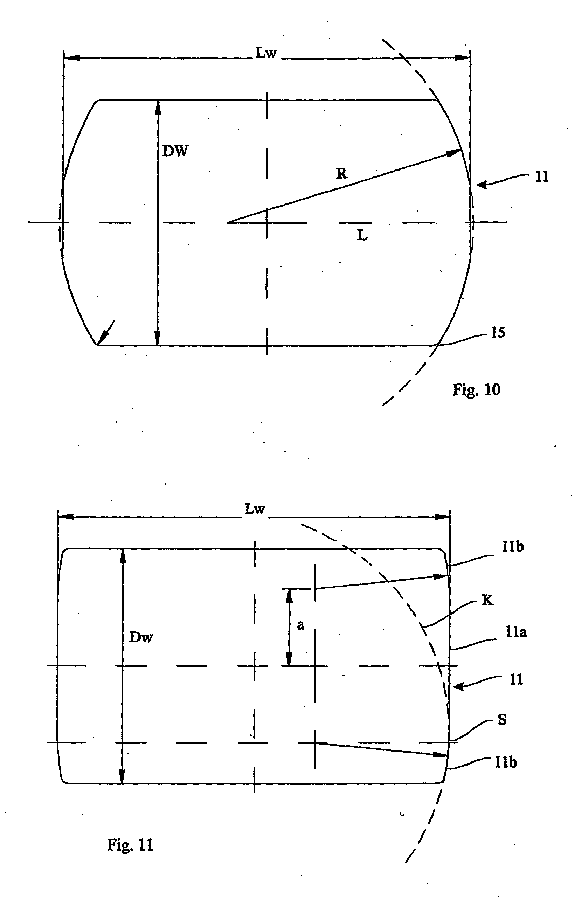

Fig. 10 zeigt einen Wälzkörper. Man erkennt, dass die Stirnfläche 11 bei dieser Ausführungsform im Wesentlichen kugelballig ausgelegt ist. Der Mittelpunkt dieser Kugel oder Kugelsegmentfläche befindet sich auf der Drehbeziehungsweise Symmetrieachse L des Wälzkörpers. Der Radius R der kugelballigen Auslegung liegt zwischen 300 mm und 800 mm, bevorzugt zwischen 500 mm und 700 mm und besonders bevorzugt zwischen 570 mm und 620 mm. Die Wahl dieses Radius hängt jedoch auch von anderen Geometrien des Wälzkörpers beispielsweise seiner Länge Lw und seinem Durchmesser Dw ab. In dem Eckbereich 15 weist der Wälzkörper, wie oben erwähnt, bevorzugt einen Radius zwischen 1 mm und 2 mm auf. Die Verwendung eines Wälzkörpers 5 in der in Fig. 10 gezeigten Ausführungsform erfordert einen Bordöffnungswinkel im Bereich von 92°. Das Bezugszeichen DW kennzeichnet den Durchmesser des Wälzkörpers.

Figur 11 zeigt eine weitere Ausführungsform eines Wälzkörpers. Im Gegensatz zu der in Figur 10 gezeigten Ausführungsform ist die Stirnfläche bei der in Figur 11 gezeigten Ausführungsform torusballig ausgelegt. Dies bedeutet, dass hier der Mittelpunkt der kreisförmigen Flächen 11b nicht auf der Symmetrieachse L liegt sondern dieser gegenüber um einen vorgegebenen Abstand a versetzt ist. Dies ist durch die Kreislinie K für den unteren Randbereich 11b veranschaulicht. Bei der in Figur 11 gezeigten Ausführungsform liegt der Radius der Krümmungen in den Bereichen 11b über der Länge L des Wälzkörpers.

In dem Schnittpunkt S zwischen der Torusmittelpunktlinie 14 und der Stirnfläche 11 gehen der Zentralbereich 11a und der Randbereich 11b kantenlos ineinander über.

Der Zentralbereich 11a der Stirnfläche kann auch bei dieser Ausführungsform eben verlaufen. Aus Figur 11 ergibt sich, dass sich der geometrische Ort sämtlicher Mittelpunkte der jeweiligen Kreislinien K selbst auf einem Kreisring um die Symmetrieachse mit dem Radius a befindet.

Durch das erfindungsgemäße Verfahren beziehungsweise die erfindungsgemäßen Lagerkomponenten ergeben sich eine größere effektive Bordhöhe und damit ein verbesserter Anlauf der Rollenstirnfläche an die Bordfläche, da die scharfe Kante der Einkerbung 7 entfällt und daher auch dieser Bereich für den Wälzkörperanlauf genutzt werden kann. Da die Fertigbearbeitung, beispielsweise das Schleifen, nach der Wärmebehandlung erfolgt, ergibt sich durch das Abkühlen kein Härteverzug bei den einzelnen Lagerkomponenten. Im Anschluss an dieses Verfahren kann bevorzugt die Mantellinie und/oder die Rollenstirnfläche bzw. die Rollenstirnflächen gehont werden.

Da die Herstellung in einer Aufspannung zwischen Spitzen erfolgen kann, werden auch Planlauffehler bei den jeweils hergestellten beziehungsweise bearbeiteten Wälzkörpern, die durch das Umspannen entstehen können, vermieden.

### Bezugszeichen

- 2: Lagerring
- 4: Zentralbereich des Lagerrings
- 4a: Laufbahn
- 5: Wälzkörper
- 6: seitlicher Bord des Lagerrings
- 6a: Bordlauffläche
- 7: Einkerbung
- 8: Berührpunkt zwischen Stirnfläche 11 und Bordlauffläche 6a
- 9: Endbereich der Einkerbung
- 11: Stirnfläche des Wälzkörpers
- 11a: Zentralbereich der Stirnfläche 11
- 11b: Randbereich der Stirnfläche 11
- 12: Schneidkörper
- 12a, 12b: Kante des Schneidkörpers 12
- 13: Werkzeug
- 14: Torusmittelpunktslinie
- 15: Eckbereich des Wälzkörpers 5
- 16: Einstichpunkt
- 17: Endfläche des Bords
- 19: Kreislinie
- 30: Kante der Einkerbung (Stand der Technik)
- 32: Kante des Wälzkörpers (Stand der Technik)
- P1: radiale Richtung
- L: Symmetrieachse des Wälzkörpers
- TV: Torusverbindung
- LW: Länge des Wälzkörpers
- LWₘₐₓ: maximale Länge des Wälzkörpers
- DW: Durchmesser des Wälzkörpers
- BA: Abstand Berührpunkt - Laufbahn
- TR: Torusradius
- R: Radius
- S: Schnittpunkt zwischen Torusmittelpunktslinie 14 und Stirnfläche 11
- a: Abstand zwischen Torusmittelpunktslinie 14 und Symmetrieachse L

## Patentansprüche

1. Verfahren zur Herstellung eines Lagerrings (2) für ein Wälzlager wobei der Lagerring (2) eine Laufbahn (4a) für einen Wälzkörper (5) und unabhängig dazu wenigstens einen seitlichen Bord (6) mit einer Bordlaufläche (6a) zur axialen Führung des Wälzkörpers (5) aufweist und in einem Verfahrensschritt eine Einkerbung (7) in eine dem Wälzkörper (5) zugewandte Lauffläche (4a, 6a) des Lagerrings eingebracht wird,
**dadurch gekennzeichnet, dass** die Endkontur der Bordlauffläche (6a) durch ein Hartdrehverfahren hergestellt wird.

2. Verfahren nach Anspruch 1
**dadurch gekennzeichnet, dass** die Einkerbung (7) durch Einstechen eines Einstechkörpers (12) in radialer Richtung des Wälzlagers erzeugt wird.

3. Verfahren nach wenigstens einem der vorangegangenen Ansprüche,
**dadurch gekennzeichnet, dass** in einem weiteren Verfahrensschritt die Laufbahn (4a) geschliffen wird.

4. Verfahren nach wenigstens einem der vorangegangenen Ansprüche,
**dadurch gekennzeichnet, dass** der Bord (6) mit einem Bordöffnungswinkel von mehr als 90° hartgedreht wird.

5. Verfahren nach Anspruch 4,
**dadurch gekennzeichnet, dass** der Bordöffnungswinkel zwischen 90° und 92°, Insbesondere bei 90,5° liegt.

## Claims

1. Method for producing a bearing ring (2) for a roller bearing, wherein the bearing ring (2) has a raceway (4a) for a roller body (5) and, independent therefrom, at least one lateral rim (6) having a rim running face (6a) for axially guiding the roller body (5), and in one method step a notch (7) is made in a running face (4a, 6a) of the bearing ring facing the roller body (5), **characterized in that** the end contour of the rim running face (6a) is produced by a hard turning process.

2. Method according to Claim 1, **characterized in that** the notch (7) is produced by forming a groove with a groove body (12) in the radial direction of the roller bearing.

3. Method according to at least one of the preceding claims, **characterized in that** in a further method step the raceway (4a) is ground.

4. Method according to at least one of the preceding claims, **characterized in that** the rim (6) is hard turned with a rim angle of aperture of more than 90°.

5. Method according to Claim 4, **characterized in that** the rim angle of aperture is between 90° and 92°, in particular is 90.5°.

## Revendications

1. Procédé de fabrication d'une bague de palier (2) pour un palier à roulement, la bague de palier (2) présentant une piste de roulement (4a) pour un corps de roulement (5) et, indépendamment de cela, au moins un bord latéral (6) avec une surface de roulement de bord (6a) pour le guidage axial du corps de roulement (5) et, dans une étape du procédé, une encoche (7) étant pratiquée dans une surface de roulement (4a, 6a) de la bague de palier tournée vers le corps de roulement (5), **caractérisé en ce que**
le contour d'extrémité de la surface de roulement de bord (6a) est fabriqué par un procédé de tournage dur.

2. Procédé selon la revendication 1,
**caractérisé en ce que**
l'encoche (7) est produite par enfoncement d'un corps de piquage (12) dans la direction radiale du palier à roulement.

3. Procédé selon au moins l'une quelconque des revendications précédentes,
**caractérisé en ce que**
dans une autre étape du procédé, la piste de roulement (4a) est meulée.

4. Procédé selon au moins l'une quelconque des revendications précédentes,
**caractérisé en ce que**
le bord (6) est usiné par tournage dur avec un angle d'ouverture de bord de plus de 90°.

5. Procédé selon la revendication 4,
**caractérisé en ce que**
l'angle d'ouverture de bord est compris entre 90° et 92°, et de préférence vaut environ 90,5°.
